# EUROPÄISCHE PATENTSCHRIFT

(11) **EP 0 544 722 B1**
(45) Veröffentlichungstag und Bekanntmachung des Hinweises auf die Patenterteilung: **11.01.1995**
(21) Anmeldenummer: 91914549.0
(22) Anmeldetag: 16.08.1991
(51) Int. Cl.: C09J 167/02

(54) **VERWENDUNG VON POLYESTERHARZEN ALS HAFTSCHMELZKLEBSTOFFE**
USE OF POLYESTER RESINS AS HOT-MELT ADHESIVES
UTILISATION DE RESINES DE POLYESTERS COMME COLLES THERMOFUSIBLES

(30) Priorität: 24.08.1990 DE 4026742
(43) Veröffentlichungstag der Anmeldung: 09.06.1993
(73) Patentinhaber: Henkel Kommanditgesellschaft auf Aktien, 40191 Düsseldorf (DE)
(72) Erfinder: PÜRKNER, Eckhardt, D-4010 Hilden (DE); ONUSSEIT, Herrmann, D-5657 Haan (DE); EICKEN, Ulrich, D-4052 Korschenbroich (DE)
(86) Internationale Anmeldenummer: EP9101552
(87) Internationale Veröffentlichungsnummer: WO9203515

(56) Entgegenhaltungen:
- DE-A- 1 595 278
- DE-A- 2 728 161

## Beschreibung

Die Erfindung liegt auf dem Gebiet der Haftschmelzklebstoffe und betrifft die Verwendung spezieller Polyesterharze als mit wäßrigen Lösung entfernbare Haftschmelzklebstoffe.

Haftschmelzkleber sind dauerklebrige Stoffe, die entsprechend den Schmelzklebern in der Wärme und im flüssigen Zustand Werkstoffoberflächen gut benetzen können und an den Oberflächen nach dem Erkalten und Erstarren fest anhaften. Von Haftschmelzklebstoffen wird allgemein erwartet, daß sie bei ihrer Verarbeitungstemperatur mindestens 24 Stunden thermisch nicht geschädigt werden. Aus diesem Grund sollte man möglichst bei der Rohstoffauswahl besonders auf thermische Stabilität und Oxidationsbeständigkeit achten. Weitere Anforderungen an die Schmelzklebstoffe sind gutes Benetzungs- und Haftungsvermögen, gute Abbindegeschwindigkeiten, hot tack, innere Elastizität sowie Viskositätswerte, die eine Applikation nach den üblichen Verfahren ermöglicht.

Aufgrund der zunehmenden Bedeutung von Wiederaufbereitungsverfahren besteht zudem der Wunsch nach Haftschmelzklebstoffen, die in Wasser löslich oder mit Wasser entfernbar sind.

Aus der DE-OS-27 28 161 sind mit Wasser entfernbare Warmschmelzklebstoffe auf Basis von Polyesterharzen aus äquimolaren Mengen an Dicarbonsäuremolekülresten und Diolmolekülresten bekannt. Zwingender Bestandteil dieser Polyesterharze sind aromatische Dicarbonsäuremoleküle, die an dem aromatischen Ring eine Sulfonatgruppe tragen. Bei Abwesenheit der Sulfonatgruppe kann das Polyesterharz nicht mehr mit Wasser entfernt werden. In der US 4 172 824 werden wasserentfernbare Copolyester-Schmelzklebstoffe beschrieben, die aus Terephthalsäure, Adipinsäure, Ethylenglykol und 1,4-Butandiol hergestellt und zur Weichmachung mit Benzoesäureestern versetzt werden. Wasserlösliche Schmelzkleber auf Basis von Polyethyloxazolin und Hydroxykomponenten bzw. Säurekomponenten werden in den europäischen Patentanmeldungen EP 297 451 und 199 468 beschrieben.

Obgleich die aus dem Stand der Technik bekannten Produkte für einige Anwendungsgebiete wirksam sein können, besteht weiterhin ein Bedarf an Haftschmelzklebern, die mit einer wäßrigen Lösung entfernbar sind und dennoch den übrigen Anforderungen an einen Haftschmelzklebstoff genügen. So sind die meisten der wasserentfernbaren Schmelzklebstoffe für die Anwendung auf dem Kunststoffsektor zu spröde. So können spröde Klebstoffe aufgrund der mangelnden inneren Elastizität beispielsweise nur schlecht zur Etikettierung von Plastikflaschen verwendet werden, da sie den vielfachen Verformungen der beklebten Kunststoffe nicht standhalten. Ein weiteres Problem der Schmelzklebstoffe ist oftmals ihre zu gute Wasserlöslichkeit, so daß es in Anwesenheit von Wasser oder hoher Luftfeuchtigkeit zu ungewollten Ablöseerscheinungen kommen kann. Ein weiteres Problem der aus dem Stand der Technik bekannten wasserentfernbaren Schmelzklebstoffe ist deren vergleichsweise hohe Viskosität, die hohe Verarbeitungstemperaturen notwendig machen. Einige zu beklebende Materialien, wie beispielsweise Kunststoffe, neigen aber bei hohen Temperaturen zu Schrumpfungen.

Aufgabe der vorliegenden Erfindung war es daher, Produkte zu finden, die als mit wäßriger Lösung entfernbare Haftschmelzkleber verwendet werden können und die oben beschriebenen Nachteile überwinden.

Der Gegenstand der vorliegenden Erfindung ist demnach die Verwendung von Polyesterharzen aus einbasischen Carbonsäuren und/oder deren Estern, mehrbasigen Carbonsäuren und/oder deren Anhydriden, mehrwertigen Alkoholen und Polyethylenglykol mit wenigstens anteilsweise unter Salzbildung abreagierten Restsäurecarboxylgruppen als mit wäßriger Lösung entfernbare Haftschmelzklebstoffe.

Die Polyesterharze können Alkydharze sein. In Anlehnung an den allgemeinen Sprachgebrauch werden unter Alkydharzen Fettsäure und/oder ölmodifizierte Polyesterharze verstanden.

Polyesterharze mit eingebautem Polyethylenglykol sind an sich bekannte wasserdispergierbare Bindemittel für wasserverdünnbare Lack- und Anstrichmittel. In der DE-AS 15 95 278 wird ein Verfahren zur Herstellung von Alkydharzen aus trocknenden Ölen, ein- und zweibasigen Säuren und mehrwertigen Alkoholen beschrieben, die zur Verbesserung der Wasserdispergierbarkeit überschüssige Sauregruppen, die zu 20 - 150 % durch Basenzusatz neutralisiert worden sind, und Polyethylenglykol bis zu 15 Gew.-% eingebaut enthalten. In Form ihrer wäßrigen Dispersion können diese Alkydharze als oxidativ trocknende Anstrichfilme verwendet werden. Unter Zusatz von Aminoplasten vermögen die wäßrigen Dispersionen der Alkydharze bei Temperaturen von 93 bis 177°C auszuhärten.

Aus der DE-OS 14 95 031 ist ein Verfahren zur Herstellung von Einbrennlacken auf Basis von Alkydharzen aus nicht-trocknenden Fettsäuren bekannt. Diese Alkydharze sind in Wasser durch eingebautes Polyethylenglykol in Mengen von 4 bis 19 Gew.-% und Neutralisation der Restsäuregruppen in Wasser löslich und selbst dispergierbar.

Aus der DE-OS 20 11 537 ist ein Verfahren zur Herstellung wasserverdünnbarer, säurehärtender Lacke auf Basis von wasserdispergierbaren Polyesterharzen bekannt. Diese Polyesterharze enthalten für die Wasserdispergierbarkeit in Mengen bis zu 75 Gew.-% Polyethylenglykol und Restsäuregruppen, die ggf. verestert sind.

Polyesterharze mit eingebautem Polyethylenglykol werden nach dem Stand der Technik jedoch lediglich in Form ihrer wäßrigen Dispersion und zudem als Anstrichmittel, welches naturgemäß nach Härtung gegen Wasser resistent sein soll, verwendet. Ein Hinweis auf die Verwendung der Polyesterharze mit eingebautem Polyethylenglykol als mit wäßriger Lösung entfernbare Haftschmelzkleber ist aus dem Stand der Technik nicht zu entnehmen.

Die erfindungsgemäß verwendeten Polyesterharze werden in einem ein- oder zweistufigen Verfahren vor allem aus einbasischen Carbonsäuren und/oder deren Ester, mehrbasigen Carbonsäuren und/oder deren Anhydriden und mehrwertigen Alkoholen und den begrenzten Mengen an Polyethylenglykol durch Um- und/oder Veresterung und Kondensationsreaktionen hergestellt.

Insbesondere wird das erfindungsgemäße Polyesterharz durch Veresterung - worunter man auch eine Umesterung zu verstehen hat - folgender Komponenten hergestellt, wobei die Prozentangabe sich auf die Gesamtmenge der Reaktanten bezieht, egal ob es sich um eine ein- oder mehrstufige Reaktion handelt:
a) mindestens 15 Gew.-% - berechnet als stöchiometrische Menge einer freien Säure - einer Komponente aus folgender Gruppe: einwertige Carbonsäuren, deren Ester und/oder einer Mischung davon,
b) mindestens 15 Gew.-% - berechnet als stöchiometrische Menge einer freien Säure - einer Komponente aus folgender Gruppe: Carbonsäure mit mindestens 2 Carbonsäure-Gruppen pro Molekül, deren Anhydrid und/oder eine Mischung davon,
c) mindestens 5 Gew.-% Polyethylenglykol gemäß der allgemeinen Formel H-(O-CH₂CH₂)ₙ-OH, wobei n eine positive ganze Zahl ist und
d) mindestens 5 Gew.-% eines Alkohols, seines Kondensationsproduktes mit einem Alkylen-Oxid und/oder Mischungen davon, wobei der Alkohol mindestens 2 Hydroxylgruppen enthält und nicht mit der allgemeinen Formel gemäß der Komponente c) übereinstimmt.

Die so hergestellten Harze haben vorzugsweise eine Säurezahl von mindestens 2. Die verbliebenen freien Säuregruppen werden vor der erfindungsgemäßen Verwendung zumindest teilweise neutralisiert.

Vorzugsweise werden die erfindungsgemäß verwendeten Harze in einem zweistufigen Verfahren hergestellt. Dazu werden im ersten Schritt die einbasischen Carbonsäuren und/oder deren Ester mit einem Teil, vorzugsweise mit der Hälfte der mehrwertigen Alkoholen bei erhöhten Temperaturen, bevorzugt bei Temperaturen über 150 °C, und unter Entfernung des Reaktionswassers umgesetzt. Zur Beschleunigung kann die Umsetzung in Anwesenheit eines Veresterungskatalysators wie z. B. eines Katalysators auf Zinnbasis, durchgeführt werden. Im zweiten Reaktionsschritt werden die mehrbasigen Carbonsäuren und/oder deren Anhydride mit dem Rest an mehrwertigen Alkoholen und dem Polyethylenglykol zur Reaktion gebracht.

Die erfindungsgemäß verwendeten Polyesterharze können durch die Art der einbasischen Carbonsäuren und/oder deren Estern unterschieden werden. So sind die verwendeten Alkydharze unter Einsatz von natürlichen Fettsäuren und/oder deren Ester, vorzugsweise die Triglyceridester der Fettsäuren hergestellt worden. Vorzugsweise werden natürliche Fettsäuren mit 6 - 22 C-Atomen, und insbesondere bis 18 C-Atomen, und/oder deren Triglyceride eingesetzt. Geeignete Fettsäuren bzw. Öle sind beispielsweise Capronsäure, Caprylsäure, Carprinsäure, Laurinsäure, Palmitinsäure, Linolsäure, Linolensäure, Lauroleinsäure, Myristoleinsäure, Ölsäure Kokosöl, Palmkernöl, Fischöl, Spermöl, Rüböl, Erdnußöl, Rindertalg, Olivenöl und/oder Palmöl. Selbstverständlich können verschiedene Fettsäuren, Öle und/oder Mischungen von Fettsäuren und Ölen sowohl gesättigter als auch ungesättigter Natur eingesetzt werden. Bevorzugt werden jedoch Fettsäuren, Öle und/oder deren Mischungen, die nur eine begrenzte Anzahl von ungesättigten Anteilen aufweisen, die einer Jodzahl unter 90, vorzugsweise unter 70 entsprechen. Höhere ungesättigte Anteile sind zwar möglich, begünstigen jedoch die Vernetzungsreaktion der verwendeten Alkydharze, so daß der Haftschmelzkleber nach Anwendung schwieriger mit einer wäßrigen Lösung entfernbar sein kann. Weiterhin bevorzugt werden Fettsäuren, Öle und/oder deren Mischungen, die nicht bei Raumtemperatur erstarren. Ein Maß für den Erstarrungspunkt in der Fettchemie ist der sogenannte Titer. Bevorzugt werden Fettsäuren und/oder Öle, deren Titer (= Temperatur in °C, dei beim Erstarren einer verflüssigten Fettsäure als Maximum eines vorübergehenden Temperaturanstiegs bestimmt wird; Methode nach Dalican: siehe "Deutsche Einheitsmethoden" Wissenschaftliche Verlagsgesellschaft mbH, Stuttgart 1989) unter 10°C, insbesondere unter 5°C liegt. Falls gewünscht, können den natürlichen Fettsäuren oder deren Triglyceride mit weiteren Monocarbonsäuren wie Versatic-, Abietinsäure und/oder deren Ester beigemischt werden. Versaticsäuren sind tertiäre, d. h. stark verzweigte, gesättigte Monocarbonsäuren mit längeren Seitenketten und tertiären COOH-Gruppen, die durch die Kochsche Carbonsäuresynthese aus Olefin, Kohlenmonoxid und Wasser hergestellt werden können. Geeignete Versaticsäuren sind beispielsweise 2,2-Dimethylpentan, Hexan-, Heptan- und Octansäuren. Die verwendeten Alkydharze werden unter Einsatz von natürlichen Fettsäuren und/oder deren Triglyceriden, ggf. in Abmischung mit Versaticsäuren, Abietinsäure und/ oder deren Ester, in Mengen von 15 - 50 Gew.-%, vorzugsweise in dem Bereich zwischen 20 und 45 Gew.-% - berechnet als eingesetzte Menge an Säuren und bezogen auf Reaktantengemisch - hergestellt.

Die erfindungsgemäß verwendeten Polyesterharze können aber auch unter Einsatz von gesättigten und/oder ungesättigten synthetischen Fettsäuren und/oder deren Ester hergestellt werden. Synthetische Fettsäuren werden in der Regel nach dem Verfahren der Paraffinoxidation hergestellt, wobei Paraffine in flüssiger Phase katalytisch mit Luft zu Fettsäuren oxidiert werden. Ungesättigte synthetische Fettsäuren können beispielsweise durch Epoxidierung von alpha- und/oder innenständigem Olefin mit Persäuren und nachfolgender Anlagerung von Cyan-Wasserstoff und Hydrolyse erhalten werden. Vorzugsweise werden zur Herstellung der verwendeten Polyesterharze synthetische Fettsäuren mit 7 - 21 Kohlenstoffatomen und/oder deren Ester eingesetzt. Die verwendeten Polyesterharze können neben den synthetischen Fettsäuren und/oder deren Ester unter Mitverwendung von Versaticsäuren, Abeitinsäure und/oder deren Ester hergestellt werden. Die Einsatzmengen an synthetischen Fettsäuren und/oder deren Ester sowie der Versaticsäuren, Abietinsäure und/oder deren Ester liegen ebenso wie der ungesättigte Anteil und der Titer dieser synthetischen Mischungen für die verwendeten Polyesterharze in dem Bereich, der für die verwendeten Alkydharze bereits angegeben worden ist.

Zur Herstellung der erfindungsgemäßen Polyesterharze können als weitere einbasische Carbonsäuren außerdem unsubstituierte aromatische Säuren unter deren ringsubstituierte Derivate wie Benzoesäure und/oder p-Butylbenzoesäure eingesetzt werden. Die Einsatzmengen der aromatischen Carbonsäuren und/oder deren ringsubstituierten Derivate liegen in dem Bereich von 0 - 35 Gew.-%, vorzugsweise von 5 bis 25 Gew.-% - bezogen auf Reaktantengemisch. Auf jeden Fall werden zur Herstellung der erfindungsgemäß verwendeten Polyesterharze mehrbasische Carbonsäuren und/oder deren Anhydride, vorzugsweise Dicarbonsäuren und insbesondere aromatische Dicarbonsäuren und/oder deren Anhydride wie Phthalsäure, Isophthalsäure und/oder deren Anhydride in Mengenbereichen von 15 bis 40 Gew.-% und vorzugsweise in Mengen zwischen 20 und 35 Gew.-% - berechnet als Säureannydrid und bezogen auf Reaktantengemisch - eingesetzt.

Zur Herstellung der erfindungsgemäßen Polyesterharze werden mehrwertige Alkohole, vorzugsweise drei- und höherwertige Alkohole und/oder deren Alkylenoxidaddukte eingesetzt. Geeignete mehrwertige Alkohole sind beispielsweise Glycerin, Pentaerythrit und/oder Trimethylolpropan sowie deren Ethylenoxid und/oder Propylenaddukte. Die mehrwertigen Alkohole werden in Mengen von 10 bis 40 Gew.-%, vorzugsweise in Mengen über 20 Gew.-% - bezogen auf Reaktantengemisch - zu den erfindungsgemäß verwendeten Harzen umgesetzt. Zudem wird unabhängig davon vom Anteil der mehrwertigen Alkohole Polyethylenglykol in die erfindungsgemäßen Harze eingebaut. Bevorzugt werden Polyethylenglykole mit einem mittleren Molekulargewicht von 600 - 10000, insbesondere von 2000 bis 6000 und in Mengenbereichen von 5 - 20, und insbesondere unter 15 Gew.-% - bezogen auf Reaktantengemisch - in die verwendeten Alkydharze und/oder Polyesterharze eingebaut.

Über den Polyethylenglykolgehalt kann die Wasserlöslichkeit der erfindungsgemäß verwendeten Harze als Haftschmelzkleber beeinflußt werden. Werden Haftschmelzkleber gewünscht, die durch geringe Mengen an Wasser entfernbar sind, so kann der Polyethylenglykol gehalt auch über den angegebenen Bereich hinaus erhöht werden. Dementsprechend verschlechtert ein niedriger Polyethylenglykolgehalt als des angegebenen Bereichs die Entfernbarkeit der erfindungsgemäß verwendeten Harze mit einer wäßrigen Lösung.

Im Rahmen der Erfindung können auch modifizierte Polyesterharze als Haftschmelzklebestoffe verwendet werden, insbesondere die urethan- und/oder epoxidmodifizierten Harze. Urethanmodifizierte sind an sich bekannte Verbindungen und können durch teilweisen Ersatz der mehrbasigen Carbonsäuren, vorzugsweise der Dicarbonsäuren und/oder deren Anhydride, mit Diisocyanaten erhalten werden. Bevorzugt werden die urethanmodifizierten Harze nach einem 3-stufigen Verfahren hergestellt, wobei die ersten beiden Verfahrensstufen im Prinzip denen der Alkydharze und/oder Polyesterharze entsprechen. Lediglich die Einsatzmenge an mehrbasigen Carbonsäuren wird im zweiten Verfahrensschritt reduziert, vorzugsweise bis zu 50 Gew.-% - bezogen auf Säureanhydridmengen im Reaktantengemisch. Im dritten Verfahrensschritt werden die aliphatischen und/oder aromatischen Diisocyanate in Mengen bis zu 50 Gew.-%, vorzugsweise bis zu 30 Gew.-% - bezogen auf Säureanhydridmenge im Reaktantengemisch - bis zur Abreaktion der freien Isocyanatgruppen, vorzugsweise in Temperaturbereichen von 50 bis 170°C, umgesetzt. Die urethanmodifizierten Polyesterharze zeichnen sich bei ihrer erfindungsgemäßen Verwendung durch verbesserte Haftung auf Substraten, sehr gute Abriebfestigkeiten und rasche Aushärtung aus. Haftschmelzklebstoffe mit verbesserten mechanischen Eigenschaften werden bei der erfindungsgemäßen Verwendung von epoxidmodifizierten Polyesterharzen erhalten. Epoxymodifzierte Alkydharze mit eingebautem Polyethylenglykol werden beispielsweise in der DE-OS 28 09 840 beschrieben. Die dort beschriebenen Alkydharze sowie deren Hersteilungsverfahren werden ausdrücklich zum Offenbarungsgehalt der vorliegenden Erfindung gezählt. Ein Hinweis auf die erfindungsgemäße Verwendung ist der DE-OS 28 09 840 nicht zu entnehmen, da dort lediglich die Verwendung der in Wasser dispergierten epoxymodifizierten Alkydharze als Überzugsmasse erwähnt ist. Vorzugsweise erfolgt die Herstellung der epoxidmodifizierten Harze ebenso wie die der urethanmodifizierten Harze in einem 3-stufigen Verfahren, wobei im letzten Verfahrensschritt die Epoxidharze zugesetzt und bei höheren Temperaturen, vorzugsweise über 80°C, umgesetzt werden. Bevorzugt werden die Epoxidharze in Mengen zu 20 Gew.-% - bezogen auf Alkydharz - mit den vorgebildeten Alkydharzen aus Verfahrensschritt 1 und 2 umgesetzt. Höhere Zusatzmengen an Epoxidharzen sind zwar möglich, erhöhen jedoch die Viskosität der modifizierten Alkydharze erheblich.

Geeignete Epoxidharze sind in der DE-OS 28 09 840 beschrieben, von diesen sind insbesondere Epoxidharze auf Basis von Bisphenol A mit einem Epoxidgehalt von 1,5 bis 2,5 mol Epoxid pro kg Harz und einem mittleren Molekulargewicht von 700 - 1500 geeignet.

Die Entfernbarkeit der verwendeten Harze mit einer wäßrigen Lösung läßt sich auch über die Restsäurecarboxylgruppen, die wenigstens anteilsweise unter Salzbildung abreagiert sind, steuern. Im Rahmen der Erfindung werden Polyesterharze bevorzugt, die eine Restsäurezahl (= Anzahl der mg KOH zur Neutralisation von freier Fettsäure in 1 g Harz) in dem Bereich von 2 - 100, vorzugsweise bis 50 und insbesondere von 5 - 40 aufweisen. Diese Restsäurecarboxylgruppen werden wenigstens anteilsweise durch Basenzusatz unter Salzbildung abreagiert. Vorzugsweise werden die Restsäurecarboxyl gruppen der erfindungsgemäß verwendeten Harze durch Basenzusatz in Neutralisationsgraden über 10 %, bevorzugt über 50 % und insbesondere in dem Bereich zwischen 75 - 100 % neutralisiert. Falls gewünscht, kann selbstverständlich auch im Überschuß mit Basen neutralisiert werden. Die zur Neutralisation eingesetzten Basen sind vorzugsweise Hydroxide der Alkali- und/oder Endalkalimetalle und/oder nichtflüchtige Amine, insbesondere die nichtflüchtigen Amine wie Triethanolamin, 2-Amino-2-methylpropanol mit 2 EO, 2-Ethyl-hexylamin, Cyclohexylamin und/oder N,N-dimethylcyclohexylamin.

Erfindungsgemäß werden die Polyesterharze als Haftschmelzklebstoffe verwendet. Entsprechend einer Ausführungsform der vorliegenden Erfindung entsprechend werden die Harze zur Etikettierung verwendet. Besonders gute Ergebnisse werden bei ihrer Verwendung für die Etikettierung von Metall-, Papier-, Kunststoff- und/oder Thermoplastik-behandelten Papieretiketten auf verschiedene Materialien erzielt. Vorzugsweise werden die Polyesterharze zur Etikettierung von Papier- und Kunststoffetiketten auf keramische, metallische Oberflächen und auf Glas und Kunststoff wie z. B. bei der Etikettierung von Bierflaschen und Plastikbehältern verwendet. Ein weiteres Anwendungsgebiet der Polyesterharze ist die Seitenbeleimung in der Buchbinderei. Des weiteren können die Polyesterharze zur Palettensicherung eingesetzt werden, d. h. eine Stabilisierung der Gegenstände auf der Palette. Schließlich können die Harze bei dem Paper-Converting verwendet werden, wozu beispielsweise die Verklebung des Papiers einer Küchenrolle an die inständige Papphülse zu zählen ist.

Die Applikationsform der Polyesterharze kann je nach Anwendungszweck variiert werden. So können die Harze per Düse oder nach dem Tauchfingerverfahren für punktförmige Applikationen, aber auch über Walzen oder Scheiben für die völlflächige Beleimung aufgetragen werden. Per Düse werden die Polyesterharze hauptsächlich dann aufgetragen, wenn der Klebstoff als Pick-up oder als Überlappungsklebstoff für die Etikettierung verwendet werden soll. In aller Regel werden die Polyesterharze zur Applikation für die Etikettierung auf Temperaturen über 80 °C, vorzugsweise in dem Bereich von 90 bis 140 °C erwärmt und mittels der genannten Methoden auf die zu verklebenden Materialien aufgebracht. Zur Etikettierung werden gerne Polyesterharze verwendet, die vergleichsweise niedrigviskos sind. Vorzugsweise zeigen die zur Etikettierung verwendeten Harze, die per Düse appliziert werden, bei Temperaturen von 100 °C eine Viskosität zwischen 0,5 - 6 Pas und bei Temperaturen von 140 °C eine Viskosität zwischen 0,1 - 1,6 Pas, gemessen nach DIN 53019 mit dem Physikarotationsviskosimeter und einer Spindel Z 3 DIN. Der Vorteil der relativ niedrigviskosen Harze liegt insbesondere bei ihrer Verwendung für die Etikettierung von Plastiketiketten. So können diese Harze problemlos mit der Düse bei Temperaturen unter 140 °C aufgetragen werden, bei denen die Kunststoffetiketten noch nicht zu der bekannten Schrumpfung neigen. Für die anderen Anwendungsbereiche, z. B. schon für die Etikettierung von Papieretiketten oder beim Paper-Converting können die Polyesterharze auch höhere Viskositäten aufweisen, sofern die Haftschmelzklebstoffe per Walze oder Scheibe appliziert werden. Bevorzugt weisen die per Walze oder Scheibe applizierten Harze Viskositäten zwischen 0,1 bis 7 Pas bei 140 °C, gemessen mit dem Physikarotationsviskosimeter, auf. Generell können die Viskositäten der Harze aber auch durch Zusatz von Lösungsmitteln oder Weichmachern in weiten Bereichen und je nach Anwendungsbedarf variiert werden.

Selbstverständlich können die verwendeten Polyesterharze in Abmischung mit üblichen Zusätzen wie Tackifierharzen, wachsartige Substanzen, Weichmacher, z. B. 2-Ethylhexanolphthalat und/oder Stabilisatoren, z. B. Antioxidantien verwendet werden. Als Tackifierharze seien beispielsweise Harzsäuren und/oder deren Derivate, Kohlewasserstoffharze und (Poly)Terpenharze genannt. Die Zusatzmengen der möglichen Zusatzstoffe liegen im Bereich der dem Fachmann allgemein bekannten Mengen. Ein ganz besonderer Vorteil der erfindungsgemäß verwendeten Polyesterharze als Haftschmelzklebstoff ist ihre Entfernbarkeit mit wäßriger Lösung. Im Prinzip können in der wäßrigen Lösung in Wasser lösliche Lösungsmitteln und/oder Reinigungsmitteln wie Tenside enthalten sein, bevorzugt wird aber nur Wasser zur Entfernung der Haftschmelzklebstoffe verwendet. So lassen sich die als Haftschmelzklebstoffe verwendeten Polyesterharze mit Wasser zumindest so weit an lösen, daß der Klebverbund gestört wird. Durch Behandlung mit heißem Wasser, vorzugsweise mit Wasser von 70 °C und ggf. durch weiteres Nachwaschen bzw. mit mechanischer Hilfe lassen sich die Klebstoffe wieder ganz entfernen. Somit sind zum Beispiel die Klebstoffe, die für die Etikettierung von Glasflaschen verwendet worden sind, während des Recycling-Prozesses bzw. beim Waschen der Flaschen wieder entfernbar. Die als Haftschmelzklebstoff zur Palettensicherung verwendeten Polyesterharze lassen sich ebenso bei der Wiederaufbereitung der Pappkartons, z. B. bei einer erneuten Pulpenherstellung, mit Wasser entfernen.

### Beispiele

### Herstellung der Harze:

### Beispiel 1

In einem 2-Liter-Dreihalskolben mit Stickstoffeinleitung, Rückflußkühler und Wasserabscheider wurden unter Rühren 312 g Kokosölfettsäure (SZ = 266 - 276, VZ = 267 - 277, JZ = 6 - 10) mit 67 g Trimethylolpropan, 146 g Pentaerythrit und 155 g Benzoesäure unter Anwesenheit von 100 ml Xylol und 2,0 g eines Veresterungskatalysators auf Zinnbasis (Swedcat 3 der Firma Swedcat) circa 3 Stunden auf 200 °C erhitzt. Während der Reaktion wurden 50 ml Wasser als Kondensat abgeschieden. Nach Abkühlung des Reaktionsgemisches auf 150°C wurden 146 Pentaerythrit, 336 g Phthalsäureanhydrid und 106 g Polyethylenglykol mit einem mittleren Molekulargewicht von 3000 zugegeben und erneut auf 200 °C erhitzt. Es wurden 35,5 ml Wasser als Kondensat abgeschieden. Nach Erreichung einer Säurezahl von 14,5 wurde die Reaktion abgebrochen und das Xylol im Vakuum entfernt. Anschließend wurden 1172 g des Alkydharzes mit 54,5 g 2-Amino-2-methylpropanol mit 2 EO sowie 2,4 g des Antioxidants Irganox^{R} 1010, d.h. Pentaerythrittettrakis(β-3(3,5-di-tert.butyl-4-hydroxyphenylproponiat), versetzt.

### Beispiel 2

Analog Beispiel 1 wurden 314 g Kokosöl, 146 g Pentaerythrit, 155 g Benzoesäure in Anwesenheit von 100 ml Xylol und 2 g Swedcat 3 umgesetzt. Es wurden 24 ml Wasser als Kondensat abgeschieden. Anschließend wurden zu dem abgekühlten Reaktionsgemisch 146 g Pentaerythrit, 336 g Phthalsäureanhydrid und 106 g Polyethylenglykol mit einem mittleren Molekulargewicht von 3000 gegeben und analog Beispiel 1 umgesetzt. Es wurden 39 ml Kondensat abgeschieden und die Reaktion wurde bei einer Säurezahl von 8,2 abgebrochen und das Xylol im Vakuum entfernt. 1130 g des erhaltenen Alkydharzes wurden mit 29,7 g 2-Amino-2-methylpropanol mit 2 EO und mit 1,1 g Di-tert. Butylhydroxy-4-toluol (Antioxidants) versetzt.

### Beispiel 3

Analog Beispiel 1 wurden 416 g Kokosölfettsäure, 51,5 g Trimethylolpropan, 146 g Pentaerythrit und 46 g tert.-Butylbenzoesäure in Anwesenheit von 100 ml Xylol und 2 g Swedcat 3 umgesetzt. Es wurden 43 ml Wasser und Kondensat abgeschieden. Anschließend wurden analog Beispiel 1 146 g Pentaerythrit, 336 g Phthalsäureanhydrid, 106 g Polyethylenglykol mit einem mittleren Molekulargewicht von 3000 umgesetzt. Nach Abscheiden von 40,5 ml Wasser als Kondensat und nach Erreichen einer Säurezahl von 6,0 wurde die Reaktion abgebrochen und das Xylol im Vakuum entfernt. Die Neutralisation des Alkydharzes wurde mit 19,2 g 2-Amino-2-methylpropanol · 2 EO pro Kilo Harz durchgeführt.

### Beispiel 4

Analog Beispiel 1 wurden 208 g Kokosölfettsäure, 51,5 g Trimethylolpropan, 146 g Pentaerythrit, 104 g Benzoesäure und 132 g Pentalyn H^{R} (Ester von Pentaerythrit mit 4 mol Abietinsäure) in Anwesenheit von 100 ml Xylol und 2 g Swedcat 3 umgesetzt. Es wurden 39 ml Wasser als Kondensat abgeschieden. Analog Beispiel 1 wurden anschließend 146 g Pentaerythrit, 336 g Phthalsäureanhydrid und 106 g Polyethylenglykol mit einem mittleren Molekulargewicht von 3000 unter Abscheidung von 39 ml Wasser als Kondensat umgesetzt und die Reaktion bei Erreichung einer Säurezahl von 17 abgebrochen. Nach Entfernung des Xylols im Vakuum wurde die Neutralisation des Alkydharzes wurde mit 54,5 g 2-Amino-2-methylpropanol mit 2 EO pro Kilo Harz durchgeführt.

### Beispiel 5

Analog Beispiel 1 wurden 314 g Kokosöl, 146 g Pentaerythrit, 224 g p-tert.-Butylbenzoesäure in Anwesenheit von 100 ml Xylol und 2 g Swedcat 3 umgesetzt. Es wurden 22 ml Kondensat abgeschieden. Zu dem abgekühlten Reaktionsgemisch wurden 146 g Pentaerythrit, 336 g Phthalsäureanhydrid und 106 g Polyethylenglykol mit einem mittleren Molekulargewicht von 3000 zugegeben und erneut auf 200°C erhitzt. Nach Abscheiden von 22 ml Wasser als Kondensat und Erreichung einer Säurezahl von 50 wurde das Reaktionsgemisch auf 150°C abgekühlt und mit 124 g Epicote^{(R)}1001 (Epoxid Harz auf Basis von Bisphenol A der Fa. Shell, mittleres MG ca. 900, 2,0 - 2,2 mol Epoxid pro kg Harz) versetzt und erneut auf 200°C erhitzt. Nach Erreichung einer Säurezahl von 10 wurde die Reaktion abgebrochen und das Xylol im Vakuum entfernt. Die Neutralisation des epoxidierten Alkydharzes erfolgte mit 32 g 2-Amino-2-methylpropanol mit 2 EO pro kg Harz.

### Beispiel 6

### Labor-Etikettierung von PET-Flaschen mit Kinnststoffetiketten

Die nach Beispiel 1 bis 5 hergestellten Alkydharze wurden zur Etikettierung von PET-Flaschen mit Polystyrol-Etiketten im Labor untersucht. Dazu wurden die auf 130°C erwärmten Alkydharze mit einem Glasstab in zwei Punkten auf das Etikett aufgebracht und dieses auf die Flasche gedrückt. Anschließend wurde das Etikett mittels aufgebrachtem Alkydharz überlappend verklebt. Nach 12 Stunden wurde die etikettierte Flasche unter laufendes 70°C warmes Wasser gehalten. Ohne mechanische Einwirkung löste sich das Etikett; der Klebstoff auf der Flasche war nach 5 Minuten augenscheinlich abgelöst.

## Patentansprüche

1. Verwendung von Polyesterharzen aus einbasischen Carbonsäuren und/oder deren Estern, mehrbasigen Carbonsäuren und/oder deren Anhydriden, mehrwertigen Alkoholen und Polyethylenglykol mit wenigstens anteilsweise unter Salzbildung abreagierten Restsäurecarboxylgruppen als mit wäßriger Lösung entfernbare Haftschmelzklebstoffe.

2. Ausführungsform nach Anspruch 1, dadurch gekennzeichnet, daß die Polyesterharze als Haftschmelzklebstoffe zur Etikettierung von Papier und Kunststoffetiketten auf verschiedene Materialien, vorzugsweise auf Glas und Kunststoff, zur Seitenbeleimung, Palettensicherung und/oder beim Paper-Konverting verwendet werden.

3. Ausführungsform nach einem der Ansprüche 1 und 2, dadurch gekennzeichnet, daß die verwendeten Polyesterharze mit einer wäßrigen Lösung, in der weitere in Wasser lösliche Lösungsmittel und/oder Tenside gelöst sein können, und insbesondere allein mit Wasser entfernbar sind.

4. Ausführungsform nach einem der Ansprüche 1 - 3, dadurch gekennzeichnet, daß modifizierte Polyesterharze, vorzugsweise urethan- und/oder epoxidmodifizierte Polyesterharze verwendet werden können.

5. Ausführungsform nach einem der Ansprüche 1 - 4, dadurch gekennzeichnet, daß die Polyesterharze in Abmischung mit üblichen Tackifierharzen wie Abietinsäurederivate, Weichmachern und/oder Stabilisatoren wie Antioxidantien als Haftschmelzklebstoffe verwendet werden.

6. Ausführungsform nach einem der Ansprüche 1 - 5, dadurch gekennzeichnet, daß die verwendeten Polyesterharze unter Einsatz von Polyethylenglykol mit einem mittleren Molekulargewicht von 600 bis 6000, vorzugsweise von 2000 bis 4000 und in Einsatzmengen von 5 - 20 Gew.-%, vorzugsweise unter 15 Gew.-% - bezogen auf Reaktantengemisch - hergestellt worden sind.

7. Ausführungsform nach einem der Ansprüche 1 - 6, dadurch gekennzeichnet, daß die verwendeten Polyesterharze unter Einsatz von 3- und/oder höherwertigen Alkoholen und/oder deren Alkylenoxidaddukten in Mengen von 10 - 40 Gew.-%, vorzugsweise über 20 Gew.-% - bezogen auf Reaktantengemisch - hergestellt worden sind.

8. Ausführungsform nach einem der Ansprüche 1 - 7, dadurch gekennzeichnet, daß die verwendeten Polyesterharze unter Einsatz von Dicarbonsäuren und/oder deren Anhydriden in Mengen von 15 - 40 Gew.-%, vorzugsweise in Mengen zwischen 20 und 35 Gew.-% - berechnet als Säureanhydrid und bezogen auf Reaktantengemisch - hergestellt worden sind.

9. Ausführungsform nach einem der Ansprüche 1 - 8, dadurch gekennzeichnet, daß die verwendeten Alkydharze unter Einsatz von natürlichen Fettsäuren mit 6 - 22 C-Atomen und/oder deren Triglyceriden, ggf. unter Miteinsatz von Versaticsäuren, Abietinsäure und/oder deren Ester, in Mengen von 15 - 50 Gew.-% - berechnet als Säure und bezogen auf Reaktantengemisch - hergestellt worden sind.

10. Ausführungsform nach einem der Ansprüche 1 - 9, dadurch gekennzeichnet, daß die verwendeten Alkydharze unter Einsatz von gesättigten und/oder ungesättigten natürlichen Fettsäuren und/oder deren Triglyceriden mit einer Jodzahl unter 90, vorzugsweise unter 70, hergestellt worden sind.

11. Ausführungsform nach einem der Ansprüche 1 - 10 dadurch gekennzeichnet, daß die verwendeten Polyesterharze unter Einsatz von synthetischen Fettsäuren mit 7 - 21 C-Atomen und/oder deren Ester sowie ggf. unter Miteinsatz von Versaticsäuren, Abietinsäure und/oder deren Ester, in Mengen von 15 - 50 Gew.-% - berechnet als Säure und bezogen auf Reaktantengemisch - hergestellt worden sind.

12. Ausführungsform nach Anspruch 11, dadurch gekennzeichnet, daß die verwendeten Polyesterharze aus synthetischen, gesättigten und/oder ungesättigten Fettsäuren und/oder deren Ester mit einer Jodzahl unter 90, vorzugsweise unter 70, hergestellt worden sind.

13. Ausführungsform nach einem der Ansprüche 1 - 12, dadurch gekennzeichnet, daß die verwendeten Polyesterharze ggf. unter Einsatz von aromatischen Carbonsäuren und/ oder deren ringsubstituierten Derivaten in Mengen von 0 - 35 Gew.-%, vorzugsweise in Mengen von 5 - 25 Gew.-%, - bezogen auf Reaktantengemisch - hergestellt worden sind.

14. Ausführungsform nach einem der Ansprüche 1 - 13, dadurch gekennzeichnet, daß die Polyesterharze mit wenigstens anteilsweise durch Zusatz von Basen, vorzugsweise nichtflüchtigen Aminen und/oder Hydroxiden der Alkali- und/ oder Erdalkalimetallen, unter Salzbildung abreagierten Restsäurecarboxylgruppen verwendet werden.

15. Ausführungsform nach einem der Ansprüche 1 - 14, dadurch gekennzeichnet, daß die verwendeten Polyesterharze eine Restsäurezahl von 2 - 100 aufweisen und die Restsäurecarboxylgruppen mit Basen in Neutralisationsgraden über 10 %, vorzugsweise über 50 % neutralisiert worden sind.

## Claims

1. The use of polyester resins of monobasic carboxylic acids and/or esters thereof, polybasic carboxylic acids and/or anhydrides thereof, polyhydric alcohols and polyethylene glycol containing residual acid carboxyl groups at least partly reacted off to form salts as pressure-sensitive hotmelt adhesives removable with aqueous solutions.

2. The use claimed in claim 1, characterized in that the polyester resins are used as pressure-sensitive hotmelt adhesives for applying paper and plastic labels on various materials, preferably glass and plastics, for page glueing, for pallet stabilization and/or in paper converting.

3. The use claimed in claim 1 or 2, characterized in that the polyester resins used are removable with an aqueous solution, in which other water-soluble solvents and/or surfactants may be dissolved, and in particular with water alone.

4. The use claimed in any of claims 1 to 3, characterized in that modified polyester resins, preferably urethane- and/or epoxy-modified polyester resins, may be used.

5. The use claimed in any of claims 1 to 4, characterized in that the polyester resins are used as pressure-sensitive hotmelt adhesives in admixture with standard tackifier resins, such as abietic acid derivatives, plasticizers and/or stabilizers.

6. The use claimed in any of claims 1 to 5, characterized in that the polyester resins used have been produced using polyethylene glycol having an average molecular weight of 600 to 6,000 and preferably 2,000 to 4,000 in quantities of 5 to 20% by weight and preferably in quantities of less than 15% by weight, based on the mixture of reactants.

7. The use claimed in any of claims 1 to 6, characterized in that the polyester resins used have been produced using trihydric and/or higher alcohols and/or alkylene oxide adducts thereof in quantities of 10 to 40% by weight and preferably in quantities above 20% by weight, based on the mixture of reactants.

8. The use claimed in any of claims 1 to 7, characterized in that the polyester resins used have been produced using dicarboxylic acids and/or anhydrides thereof in quantities of 15 to 40% by weight and preferably in quantities of 20 to 35% by weight, expressed as anhydride and based on the mixture of reactants.

9. The use claimed in any of claims 1 to 8, characterized in that the alkyd resins used have been produced using natural fatty acids containing 6 to 22 carbon atoms and/or triglycerides thereof, optionally in conjunction with versatic acids, abietic acid and/or esters thereof, in quantities of 15 to 50% by weight, expressed as acid and based on the mixture of reactants.

10. The use claimed in any of claims 1 to 9, characterized in that the alkyd resins used have been produced using saturated and/or unsaturated natural fatty acids and/or triglycerides thereof having an iodine value below 90 and preferably below 70.

11. The use claimed in any of claims 1 to 10, characterized in that the polyester resins used have been produced using synthetic fatty acids containing 7 to 21 carbon atoms and/or esters thereof, optionally in conjunction with versatic acids, abietic acid and/or esters thereof, in quantities of 15 to 50% by weight, expressed as acid and based on the mixture of reactants.

12. The use claimed in claim 11, characterized in that the polyester resins used have been produced from synthetic, saturated and/or unsaturated fatty acids and/or esters thereof having an iodine value below 90 and preferably below 70.

13. The use claimed in any of claims 1 to 12, characterized in that the polyester resins used have been produced optionally using aromatic carboxylic acids and/or ring-substituted derivatives thereof in quantities of 0 to 35% by weight and preferably in quantities of 5 to 25% by weight, based on the mixture of reactants.

14. The use claimed in any of claims 1 to 13, characterized in that the polyester resins are used with residual acid carboxyl groups at least partly reacted off to form salts by addition of bases, preferably non-volatile amines and/or hydroxides of the alkali metals and/or alkaline earth metals.

15. The use claimed in any of claims 1 to 14, characterized in that the polyester resins used have a residual acid value of 2 to 100 and the residual carboxyl groups have been neutralized with bases in degrees of neutralization above 10% and preferably above 50%.

## Revendications

1. Utilisation de résines de polyester à partir d'acides carboxyliques unibasiques et/ou de leurs esters, d'acides carboxyliques pluribasiques et/ou de leurs anhydrides, d'alcools plurivalents, et de polyéthylèneglycol, avec des groupes carboxyle d'acide résiduel ayant réagi au moins partiellement avec formation de sel, comme colles thermofusibles éliminables avec une solution aqueuse.

2. Mode d'exécution selon la revendication 1, caractérisé en ce que les résines de polyester sont utilisées comme colles thermofusibles en vue de l'étiquetage de papier et d'étiquettes en matière plastique sur différents matériaux, de préférence sur le verre et la matière plastique en vue de l'encollage sur les côtés, la sécurité des palettes, et/ou dans le procédé de façonnage (converting) du papier.

3. Mode d'exécution selon une des revendications 1 et 2, caractérisé en ce que les résines de polyester utilisées sont éliminables avec une solution aqueuse, dans laquelle d'autres solvants solubles dans l'eau et/ou des agents tensioactifs peuvent être dissous, et en particulier seulement avec de l'eau.

4. Mode d'exécution selon l'une des revendications 1 à 3, caractérisé en ce que des résines de polyester modifiées, de préférence des résines de polyester modifiées par de l'uréthanne et/ou par un époxyde, peuvent être utilisées.

5. Mode d'exécution selon l'une des revendications 1 à 4, caractérisé en ce que les résines de polyester sont utilisées en mélange avec des résines habituelles à propriété adhésive comme les dérivés de l'acide abiétique, des agents plastifiants, et/ou avec des agents stabilisants comme des anti-oxydants, en tant que colles thermofusibles.

6. Mode d'exécution selon l'une des revendications 1 à 5, caractérisé en ce que les résines de polyester utilisées ont été produites en mettant en oeuvre du polyéthylèneglycol de poids moléculaire moyen de 600 à 6000, de préférence de 2000 à 4000 et en utilisant des quantités allant de 5 à 20 % en poids, de préférence inférieures à 15 % en poids, rapportées au mélange des réactants.

7. Mode d'exécution selon l'une des revendications 1 à 6, caractérisé en ce que les résines de polyester utilisées, ont été produites par mise en oeuvre d'alcools trivalents et/ou de valence supérieure, et/ou de leurs produits d'addition avec des oxydes d'alcoylène en quantités allant de 10 à 40 % en poids, de préférence au-dessus de 20 % en poids, rapportées au mélange des réactants.

8. Mode d'exécution selon l'une des revendications 1 à 7, caractérisé en ce que les résines de polyester utilisées ont été produites en mettant en oeuvre des acides dicarboxyliques et/ou leurs annydrides en quantités allant de 15 à 40 % en poids, de préférence en quantités comprises entre 20 et 35 % en poids, calculées comme anhydride d'acide et rapportées au mélange de réactants.

9. Mode d'exécution selon l'une des revendications 1 à 8, caractérisé en ce que les résines alkyde utilisées ont été produites en mettant en oeuvre des acides gras naturels ayant de 6 à 22 atomes de carbone et/ou leurs triglycérides, le cas échéant avec utilisation conjointe d'acides versatiques, d'acide abiétique, et/ou de leurs esters, en quantités allant de 15 à 50 % en poids, calculées comme acide et rapportées au mélange des réactants.

10. Mode d'exécution selon l'une des revendications 1 à 9, caractérisé en ce que les résines alkyde utilisées ont été produites en mettant en oeuvre des acides gras naturels saturés et/ou non saturés et/ou leur triglycérides ayant un indice d'iode en dessous de 90, de préférence en dessous de 70.

11. Mode d'exécution selon l'une des revendications 1 à 10, caractérisé en ce que les résines de polyester utilisées ont été produites en mettant en oeuvre des acides gras synthétiques ayant de 7 à 21 atomes de carbone et/ou leurs esters ainsi que le cas échéant en utilisant conjointement des acides versatiques, l'acide abiétique, et/ou leurs esters, en quantité allant de 15 à 50 % en poids calculées comme acide, et rapportées au mélange de réactifs.

12. Mode d'exécution selon la revendication 11, caractérisé en ce que les résines de polyester utilisées ont été produites à partir d'acides gras saturés et/ou non saturés, synthétiques, et/ou de leurs esters, ayant un indice d'iode en dessous de 90, de préférence en dessous de 70.

13. Mode d'exécution selon l'une des revendication 1 à 12, caractérisé en ce que les résines de polyester utilisées ont été produites le cas échéant en mettant en oeuvre des acides carboxyliques aromatiques et/ou leurs dérivés substitués sur le cycle, en quantités allant de 0 à 35 % en poids, de préférence en quantités de 5 à 25 % en poids, rapportées au mélange de réactants.

14. Mode d'exécution selon l'une des revendications 1 à 13, caractérisé en ce que les résines de polyester ont été utilisées avec des groupes carboxyle d'acides résiduels qui ont réagi au moins partiellement par addition de base, de préférence des amines non volatiles et/ou des hydroxydes de métaux alcalins et/ou alcalino-terreux, avec formation de sels.

15. Mode d'exécution selon l'une des revendications 1 à 14, caractérisé en ce que les résines de polyester utilisées possèdent un indice d'acide résiduel de 2 à 100 et en ce que les groupes carboxyle des acides résiduels ont été neutralisés avec des bases, à des degrés de neutralisation supérieurs à 10 %, de préférence supérieurs à 50 %.
